# EUROPÄISCHE PATENTSCHRIFT

(11) **EP 3 279 008 B1**
(45) Veröffentlichungstag und Bekanntmachung des Hinweises auf die Patenterteilung: **05.08.2020**
(21) Anmeldenummer: 17173947.7
(22) Anmeldetag: 01.06.2017
(51) Int. Cl.: B60B 17/00

(54) **SCHALLGEDÄMPFTES SCHIENENFAHRZEUGRAD**
NOISE-REDUCED RAILWAY VEHICLE WHEEL
ROUE INSONORISÉE DE VÉHICULE SUR RAILS

(30) Priorität: 05.08.2016 DE 102016214522
(43) Veröffentlichungstag der Anmeldung: 07.02.2018
(73) Patentinhaber: ContiTech Luftfedersysteme GmbH, 30165 Hannover (DE)
(72) Erfinder: Gedenk, Volker, 30966 Hemmingen (DE); Stöter, Bernd, 30880 Laatzen (DE); Storre, Jens, 37176 Nörten-Hardenberg (DE); Paulsen, Hans-Peter, 37079 Göttingen (DE); Gawinski, Hubertus, 31867 Lauenau (DE)
(74) Vertreter: Kilsch, Armin Ralph

(56) Entgegenhaltungen:
- EP-A1- 2 332 802
- EP-A1- 2 397 314
- WO-A1-2005/072988
- DE-A1-102009 037 936
- DE-C- 814 167
- US-A- 3 993 356
- SONG LIXIAN ET AL: "Preparation of silicone rubber foam using supercritical carbon dioxide", MATERIALS LETTERS, Bd. 121, 31. Januar 2014 (2014-01-31), Seiten 126-128, XP028626780, ISSN: 0167-577X, DOI: 10.1016/J.MATLET.2014.01.125

## Beschreibung

Die Erfindung betrifft ein Schienenfahrzeugrad, aufweisend mindestens eine Radscheibe und einen Radkranz bzw. Radreifen, bei dem mindestens die Radscheibe mit einer Auflage aus schalldämmend wirkendem bzw. schwingungsdämpfendem Werkstoff versehen ist.

Der Schienenfahrzeugverkehr und insbesondere der Güterwagenverkehr verursachen erheblichen Lärm. Der Gesetzgeber ist daher gezwungen, hier zu handeln und entsprechende Vorgaben zur Geräuschreduzierung zu machen. Um Güterwagenräder, bei denen die Bremsbacken am Außenumfang angreifen, leiser zu machen, besteht eine bekannte Lösung darin, neuartige Bremsbeläge einzusetzen, die die Radreifen nicht so stark aufrauhen, wie die bisherigen Bremsbeläge.

Da ein Rad ein schwingungsfähiges Gebilde darstellt, gibt es auch schon seit vielen Jahren Ansätze, diese Schwingungen zu bedämpfen. Dazu gehören neben Schwingungsabsorbern auch unterschiedliche Beschichtungen der Radscheibe mit einem viskoelastischen Material.

Beläge aus schwingungsdämpfenden Werkstoffen für Schienenfahrzeugräder sind seit langem bekannt. So offenbart die DE 19 26 312 B2 ein geräuschdämpfendes Scheibenrad für Schienenfahrzeuge, bestehend aus Radscheibe und Radreifen, bei dem auf der Radscheibe eine weitere Metallscheibe unter Zwischenlage einer Kunststoffschicht angeordnet bzw. aufgeklebt ist. Die Metallscheibe besitzt eine zur Radscheibe unterschiedliche Eigenfrequenz und bildet mit der Radscheibe ein Geräuschdämpfungssystem, bei dem Radscheibe und Metallscheibe gegenphasig schwingen und hierdurch eine Interferenzdämpfung erzeugen. Diese Schwingungen werden durch die Kunststoffschicht zusätzlich bedämpft.

Die DE 814 167 B offenbart ein Rad für Schienenfahrzeuge, bei dem die Außenflächen ganz oder teilweise mit einem Überzug aus schalldämmender Werkstoff verkleidet sind. Der schalldämmende Werkstoff ist als Moosgummi bzw. Schwammgummi ausgebildet, dessen Struktur eine Veränderung seines Volumens zulässt. Dadurch wird ein Mitschwingen der mit der Luft in Verbindung stehenden Oberfläche des Überzuges vermieden. Dies kann durch zusätzliche Schichten auf der Oberfläche verstärkt werden.

Die DE 827 076 B offenbart ebenfalls ein Rad für Schienenfahrzeuge mit einem Überzug aus schalldämmender Werkstoff, bei dem der Überzug jedoch mehrschichtig ausgebildet ist und eine auf der Radscheibe aufliegende Schicht aus Gummi beinhaltet, die auf ihrer Außenfläche eine weitere Schicht aus einem schalldämmender wirkenden Werkstoff aufweist, wie zum Beispiel Schwammgummi.

Die DE 833 362 B offenbart ein gedämpftes Eisenbahnrad, bei dem ein zusätzlicher gegenüber dem Radkörper beweglicher Ringkörper vorgesehen ist, der unter Einfluss der Radschwingungen Relativbewegungen gegenüber dem Rad ausführen kann. Zwischen Radkörper und Ringkörper findet dann eine Flächenreibung statt, die dämpfend wirkt.

Die EP 2 332 802 offenbart eine Absorptionsbeschichtung auf schwingenden Oberflächen von Schienenfahrzeugen, wobei die Oberfläche einen geschlossenzelligen Elastomerschaum auf zu mindestens einem Teilbereich aufweist, der mit der Oberfläche des Bauteils stoffschlüssig verbunden ist. Dadurch wird die Entstehung von Körperschall und von daraus erzeugtem Luftschall eingedämmt.

Die Veröffentlichung Material Letters 121 (2014) 126-128, 2014 Elsevier B.V.,"Preparation of silicone rubber foam using supercritical carbon dioxide", Lixan Song et al., offenbart ein Verfahren zum Aufschäumen von Silikonmischungen, geht jedoch nicht weiter ein auf deren Anwendung zur Dämmung von Schall.

Die EP 2 397 314 A1 offenbart ein Verfahren, mit dem ein geräuschdämpfender Schaum innerhalb eines Kraftfahrzeugreifens eingebracht werden kann, hier auf der Innenseite unterhalb seiner Lauffläche. Ein solches Verfahren ist für Schienenräder, die einer relativ hohen Temperaturbelastung ausgesetzt sind, ungeeignet.

All diese bisher im Stand der Technik bekannten Lösungen erfordern jedoch entweder mehrere zusätzliche Bauteile für das Rad oder aber Schichtauflagen, die relativ schwer sind und das Radgewicht unnötig erhöhen. Schwingungsabsorber sind aufwendig am Rad zu befestigen und schwächen die Struktur des Rades. Beschichtungen konnten sich aufgrund mangelnder Wirksamkeit nicht recht durchsetzen. Da die Beschichtungsdicke konventioneller Beschichtungen klein ist gegenüber der Materialdicke des Schienenrades, kann sie der Radschwingung nicht recht entgegenwirken. Da sich bei der oben beschriebenen Bremsung mittels Bremsklötzen/ Bremsbacken auf den Laufflächen (= Standard bei Güterwaggons) auch die Radscheiben stark erhitzen können, können übliche Antidröhnmaterialen z.B. auf Bitumenbasis, nicht zum Einsatz kommen.

Darüber hinaus besteht bei Schienenfahrzeugrädern die Gefahr, dass bei einer kurzfristigen Überhitzung, etwa bei starken und häufigen Bremsvorgängen, die Beschichtung zersetzt werden kann und dann ihre schalldämpfende Wirkung verliert. Die Radscheiben von Güterwagenrädem werden daher mit einer Temperatur-Indikatorfarbe beschichtet, die eine unzulässige Überhitzung von über 280°C durch dauerhafte Veränderung von Farbe und Struktur anzeigt.

Für die Erfindung bestand also die Aufgabe, ein geräuschgedämpftes Schienenfahrzeugrad bereitzustellen, welches nur wenige zusätzliche Bauteile erfordert, möglichst gewichtsneutral und einfach herzustellen ist und zudem eine Indikation einer unzulässigen Überhitzung ermöglicht.

Gelöst wird diese Aufgabe durch die Merkmale des Hauptanspruchs. Weitere vorteilhafte Ausbildungen sind in den Unteransprüchen offenbart.

Dabei wird als geräuschdämpfende Auflage der Radscheibe eine mindestens einseitige Beschichtung aus microporösem Silikonwerkstoff verwendet, wobei das spezifische Gewicht des Silikonwerkstoffs zwischen 0,4 g/cm³ und 1,2 g/cm³ liegt, vorzugsweise zwischen 0,75 g/cm³ und 0,85 g/cm³. Durch die besondere Ausbildung als mikroporöser Schichtstoff mit einem solchen spezifischen Gewicht hat sich überraschenderweise eine außergewöhnlich gute Geräuschdämpfung ergeben. Zusätzlich zeigt die Verwendung eines Silikonwerkstoffs an sich schon eine bereits recht gute Temperaturbeständigkeit.

Innerhalb des der Silikonwerkstoffs sind dabei Füllstoffe, insbesondere Metalloxide verteilt. Durch innere Schwingungen der Metalloxide im Silikonwerkstoff entsteht eine innere Reibung / Dissipation, die die Schallabstrahlung wirksam bedämpft. Ebenfalls sehr gut ausgeprägt ist dieser Vorteil, wenn als Füllstoff Kaolin, Kreide oder Bariumsulfat im Silikonwerkstoff feinverteilt verteilt sind. Als Füllstoffe können aber auch Oxide wie etwa Aluminiumoxid Al2O3 oder spezielles Eisenoxid Fe3O4 enthalten sein.

Eine weitere vorteilhafte Ausbildung besteht darin, dass der Silikonwerkstoff so ausgebildet ist, dass er bei Temperaturen oberhalb von 250° C einen dauerhaften Farbumschlag zeigt. Dadurch erhält man einen guten Indikator für Temperaturüberschreitungen und kann durch regelmäßige Kontrollen feststellen, ob der Schichtwerkstoff geschädigt ist und seine Dämpfungs- und Schallabsorptionsfähigkeit nicht mehr ausreichend erfüllen kann. Beispielsweise könnte das dadurch erfolgen, dass der Silikonwerkstoff mit einer Indikatorfarbe vermischt bzw. versehen wird.

Anhand eines Ausführungsbeispiels soll die Erfindung näher erläutert werden. Es zeigen
- Fig. 1: ein erfindungsgemäßes Schienenfahrzeugrad im Schnitt
- Fig. 2: das erfindungsgemäße Schienenfahrzeugrad nach Fig.1 in einer perspektivischen Darstellung.

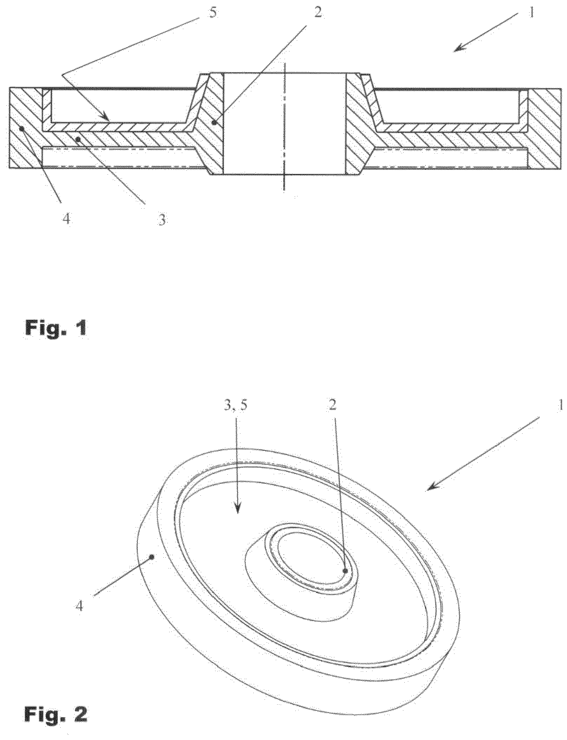

Die Fig. 1 zeigt ein erfindungsgemäßes Schienenfahrzeugrad 1 im Schnitt, welches im Wesentlichen aus der Nabe 2, der Radscheibe 3 und dem Radkranz bzw. Radreifen 4 besteht. Fig. 2 zeigt dasselbe Schienenfahrzeugrad 1 in einer perspektivischen Darstellung.

Nabe 2, Radscheibe 3 und Radreifen 4 sind hier einstückig aus Metall ausgebildet, können aber ebenso gut als Einzelteile ausgebildet und miteinander verbunden sein.

Die Radscheibe 3 sowie in diesem Fall auch die inneren Flanken von Nabe 2 und Radreifen 4 sind einseitig mit einer Auflage aus schalldämmend wirkendem bzw. schwingungsdämpfendem Werkstoff versehen, nämlich mit einer einseitigen Beschichtung 5 aus microporösem Silikonwerkstoff.

Das spezifische Gewicht des Silikonwerkstoffs beträgt hier 0,8 g/cm³. Innerhalb des Silikonwerkstoffs ist erfindungsgemäß Bariumsulfat (Schwerspat = BaSO4) als Füllstoff feinverteilt.

### Bezugszeichenliste

### (Teil der Beschreibung)

- 1: Schienenfahrzeugrad
- 2: Nabe
- 3: Radscheibe
- 4: Radkranz / Radreifen
- 5: Beschichtung aus microporösem Silikon

## Patentansprüche

1. Schienenfahrzeugrad (1), aufweisend mindestens eine Radscheibe (3) und einen Radkranz bzw. Radreifen (4), bei dem mindestens die Radscheibe (3) mit einer Auflage aus schalldämmend wirkendem bzw. schwingungsdämpfendem Werkstoff versehen ist, **dadurch gekennzeichnet, dass** die Auflage als eine mindestens einseitige Beschichtung (5) der Radscheibe aus microporösem Silikonwerkstoff ausgebildet ist, wobei das spezifische Gewicht des Silikonwerkstoffs zwischen 0,4 g/cm³ und 1,2 g/cm³ liegt, vorzugsweise zwischen 0,75 g/cm³ und 0,85 g/cm³ und wobei innerhalb des Silikonwerkstoffs Füllstoffe verteilt sind, die durch Schwingungen im Silikonwerkstoff eine innere Reibung erzeugen.

2. Schienenfahrzeugrad nach Anspruch 1, bei dem Metalloxide als Füllstoffe innerhalb des Silikonwerkstoffs verteilt sind.

3. Schienenfahrzeugrad nach Anspruch 2, bei dem Kaolin, Kreide oder Bariumsulfat als Füllstoffe innerhalb des Silikonwerkstoffs verteilt sind.

4. Schienenfahrzeugrad nach einem der Ansprüche 1 bis 3, bei dem der Silikonwerkstoff bei Temperaturen oberhalb von 250° C einen dauerhaften Farbumschlag zeigt.

## Claims

1. Rail vehicle wheel (1), having at least one wheel disc (3) and a wheel flange or wheel tyre (4), in which at least the wheel disc (3) is provided with a covering of sound-absorbing or vibration-damping material, **characterized in that** the covering is formed as an at least one-sided coating (5) of the wheel disc of microporous silicone material, the relative density of the silicone material lying between 0.4 g/cm³ and 1.2 g/cm³, preferably between 0.75 g/cm³ and 0.85 g/cm³ and fillers that produce an internal friction from vibrations in the silicone material being distributed within the silicone material.

2. Rail vehicle wheel according to Claim 1, in which metal oxides are distributed as fillers within the silicone material.

3. Rail vehicle wheel according to Claim 2, in which kaolin, chalk or barium sulfate are distributed as fillers within the silicone material.

4. Rail vehicle wheel according to one of Claims 1 to 3, in which the silicone material undergoes a permanent change in colour at temperatures above 250°C.

## Revendications

1. Roue de véhicule sur rails (1), présentant au moins un disque de roue (3) et une couronne de roue ou un pneu de roue (4), au moins le disque de roue (3) étant pourvu d'une couche constituée d'un matériau agissant de manière insonorisante ou amortissant les oscillations, **caractérisée en ce que** la couche est réalisée sous la forme d'un revêtement (5) au moins d'un côté du disque de roue, constitué d'un matériau à base de silicone microporeux, le poids spécifique du matériau à base de silicone étant compris entre 0,4 g/cm³ et 1,2 g/cm³, de préférence entre 0,75 g/cm³ et 0,85 g/cm³ et des charges étant réparties à l'intérieur du matériau à base de silicone, lesquelles produisent un frottement intérieur dans le matériau à base de silicone sous l'effet des oscillations.

2. Roue de véhicule sur rails selon la revendication 1, dans laquelle des oxydes métalliques sont répartis en tant que charges à l'intérieur du matériau à base de silicone.

3. Roue de véhicule sur rails selon la revendication 2, dans laquelle du kaolin, de la craie ou du sulfate de baryum sont répartis en tant que charges à l'intérieur du matériau à base de silicone.

4. Roue de véhicule sur rails selon l'une quelconque des revendications 1 à 3, dans laquelle le matériau à base de silicone subit un changement de couleur permanent à des températures au-dessus de 250°C.
